# EUROPÄISCHE PATENTSCHRIFT

(11) **EP 0 954 705 B1**
(45) Veröffentlichungstag und Bekanntmachung des Hinweises auf die Patenterteilung: **21.05.2003**
(21) Anmeldenummer: 98909311.7
(22) Anmeldetag: 23.01.1998
(51) Int. Cl.: F16B 5/00

(54) **BAUTEILGRUPPE**
COMPONENT GROUP
GROUPE D'ELEMENTS DE CONSTRUCTION

(30) Priorität: 24.01.1997 DE 19703751
(43) Veröffentlichungstag der Anmeldung: 10.11.1999
(73) Patentinhaber: "Durable" Hunke & Jochheim GmbH & Co. KG, 58636 Iserlohn (DE)
(72) Erfinder: MAIER-HUNKE, Horst-Werner, D-58640 Iserlohn (DE)
(74) Vertreter: Böning, Manfred, Prof.Dr.-Ing.
(86) Internationale Anmeldenummer: DE9800283
(87) Internationale Veröffentlichungsnummer: WO98032974

(56) Entgegenhaltungen:
- DE-C- 937 493
- FR-A- 2 174 320
- CAMPBELL, F. J.: "Symmetrical Oil Containment Boom Connector" NAVY TECHNICAL DISCLOSURE BULLETIN, Bd. 1, Nr. 1, Mai 1976, Seiten 15-19, XP002069613

## Beschreibung

### Technisches Gebiet

Die Erfindung betrifft eine Bauteilgruppe aus mehreren zusammensteckbaren Teilen, bei der jede der miteinander zu verbindenden Seiten der Teile mindestens eine hinterschnittene Nut und einen Steg aufweist und bei der die Form und Lage der miteinander in Eingriff bringbaren Nuten und Stege so aufeinander abgestimmt sind, daß durch eine gedachte 180°-Schwenkung jeweils eines von jeweils zwei benachbarten Teilen um eine zwischen den Teilen gelegene, parallel zu den Nuten und Stegen verlaufende Achse die Nuten und Stege der Teile in eine deckungsgleiche Lage überführbar sind.

### Stand der Technik

Aus der FR 21 74 320 A ist eine aus zwei identischen Bauteilen bestehende Bauteilgruppe mit Steckverbindungen bekannt, deren Teile an sich gegenüberliegenden Seiten Nuten und Stege aufweisen. Die bei der bekannten Bauteilgruppe verwendeten Teile eignen sich nicht zur Bildung von Bauteilgruppen, die aus mindestens einem Zwischenteil und zwei identischen, nur an einer Seite mit Verbindungselementen versehenen Endteilen bestehen.

Bekannt ist außerdem aus "Navy Technical Disclosure Bulletin vol. 1, No. 1, May 1976, S. 15" eine Ölsperre mit Nuten und Stege aufweisenden Steckverbindungen, die sich jedoch nicht zur Herstellung eines Ständers eignen, da ihre Verbindungsstellen gelenkig ausgebildet sind.

### Darstellung der Erfindung

Der Erfindung liegt die Aufgabe zugrunde, eine Bauteilgruppe der in Betracht gezogenen Gattung aus mehreren Teilen zu schaffen, bei der identische Endteile mit einem Zwischenteil oder mehreren ebenfalls identischen Zwischenteilen gekoppelt sind. Diese Aufgabe wird erfindungsgemäß dadurch gelöst, daß die Bauteilgruppe einen Ständer bildet, der aus zwei Endteilen und mindestens einem zwischen diesen angeordneten Zwischenteil besteht und daß die nur an einer Seite mit mindestens einer Nut und mindestens einem Steg ausgestatteten Endteile gegeneinander austauschbar ausgebildet sind.

Weitere Einzelheiten und Merkmale der Erfindung ergeben sich aus den Unteransprüchen und der nachstehenden Beschreibung mehrerer in der beigefügten Zeichnung dargestellter Ausführungsformen.

### Kurze Beschreibung der Zeichnungen

Es zeigen:
Fig. 1 eine aus zwei identischen Zwischenteilen und zwei identischen Endteilen bestehende, einen Ständer bildende Bauteilgruppe,
Fig. 2 eine besonders zweckmäßige Steckverbindung für Bauteilgruppen der in Fig. 1 dargestellten Art,
Fig. 3 die Gestaltung der miteinander korrespondierenden Nuten und Stege der Steckverbindung gemäß Fig. 2 und
Fig. 4 eine modifizierte Bauteilgruppe.

### Wege zur Ausführung der Erfindung

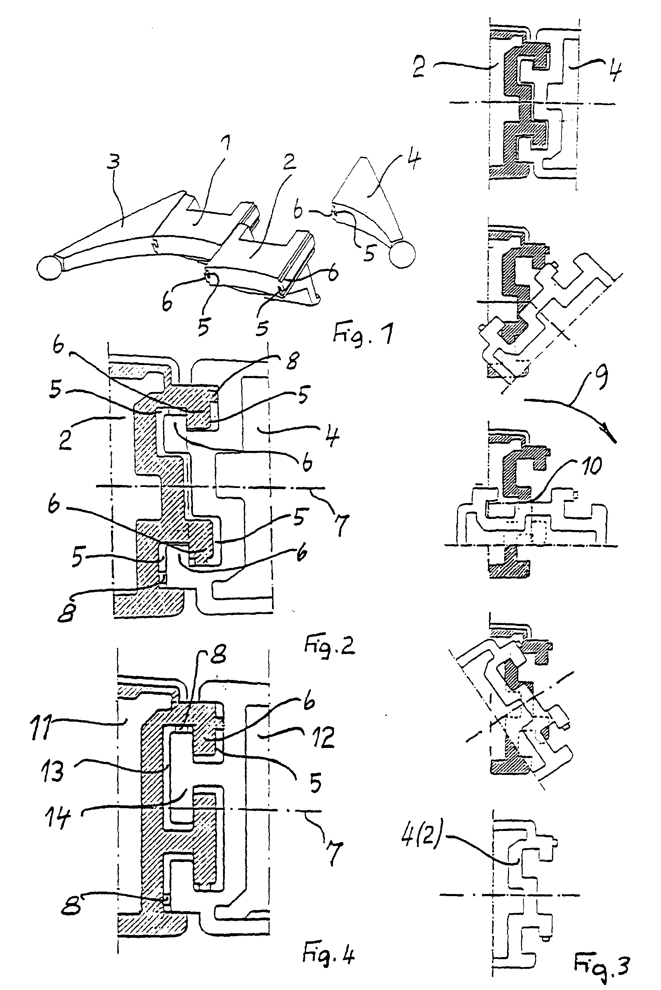

Bei der einen Ständer bildenden Baugruppe gemäß Fig. 1 sind zwei identische Zwischenteile 1,2 miteinander und mit zwei ebenfalls identischen Endteilen 3,4 verbunden. Die Zwischenteile 1,2 weisen an jeder ihrer sich gegenüberliegenden Seiten jeweils eine Nut 5 und einen Steg 6 auf, während die Endteile 3,4 nur an einer Seite mit einer Nut 5 und einem Steg 6 ausgestattet sind. Man erkennt, daß die beiden Endteile 3,4 sowohl auf der linken als auch auf der rechten Seite der Zwischenteile 1,2 mit diesen verbunden werden können. Man braucht z.B. lediglich das Endteil 4 um 180' um eine parallel zum Steg 6 verlaufende Achse zu schwenken, um es in eine der Position des Endteiles 3 entsprechende Lage zu überführen.

Eine besonders vorteilhafte Steckverbindung zeigt die Fig. 2. In diesem Falle sind die miteinander zu verbindenden Seiten zweier Teile 2 und 4 jeweils mit zwei im Abstand von einer gemeinsamen Mittellinie 7 angeordneten Nuten 7 bzw. Stegen 6 versehen, wobei die Stege 6 als Lagearretierungsnocken 8 ausgebildete Vorsprünge aufweisen. Wie anhand der Fig. 3 erkennbar, sind die Nuten 5 und Stege 6 so geformt, daß ihre Konturen sich ab- bzw. überdecken, wenn man die Nuten und Stege z.B. des Teiles 4 in Richtung des Pfeiles 9 um 180' um eine zwischen den Teilen gelegene, parallel zu den Nuten 5 und Stegen 6 verlaufende Achse 10 schwenkt.

Die Form der Nuten und Stege läßt sich variieren. So zeigt die Fig. 4 eine Verbindung zweier Teile 11 und 12, bei der neben Nuten 5 und Stegen 6 der zuvor beschriebenen Art breitere Nuten 13 und Stege 14 zur Anwendung gelangen.

## Patentansprüche

1. Bauteilgruppe aus mehreren zusammensteckbaren Teilen, bei der jede der miteinander zu verbindenden Seiten der Teile mindestens eine hinterschnittene Nut und einen Steg aufweist und bei der die Form und Lage der miteinander in Eingriff bringbaren Nuten und Stege so aufeinander abgestimmt sind, daß durch eine gedachte 180°-Schwenkung jeweils eines von jeweils zwei benachbarten Teilen um eine zwischen den Teilen gelegene, parallel zu den Nuten und Stegen verlaufende Achse die Nuten und Stege der Teile in eine deckungsgleiche Lage überführbar sind, **dadurch gekennzeichnet, daß** sie einen Ständer bildet, der aus zwei Endteilen (3,4) und mindestens einem zwischen diesen angeordneten Zwischenteil (1,2) besteht und daß die nur an einer Seite mit mindestens einer Nut (5) und mindestens einem Steg (6) ausgestatteten Endteile (3,4) gegeneinander austauschbar ausgebildet sind.

2. Bauteilgruppe nach Anspruch 1, **dadurch gekennzeichnet, daß** jede der miteinander zu verbindenden Seiten der zu koppelnden Teile jeweils zwei senkrecht zu einer gemeinsamen Mittellinie (7) der Teile im Abstand voneinander und fluchtend zueinander angeordnete Nuten (5) und Stege (6) aufweist.

3. Bauteilgruppe nach Anspruch 2, **dadurch gekennzeichnet, daß** beidseits der gemeinsamen Mittellinie (7) der miteinander verbundenen Teile (3,1;1,2;2,4) Nuten (5) angeordnet sind.

4. Bauteilgruppe nach einem oder mehreren der Ansprüche 1 bis 3, **dadurch gekennzeichnet, daß** die Stege (6) mit Lagearretierungsnocken (8) versehen sind.

## Claims

1. Component group consisting of a plurality of parts which can be fitted together, in which each of the sides, which are to be connected to one another, of the parts has at least one undercut groove and a web, and in which the shape and position of the grooves and webs which can be brought into engagement with one another are co-ordinated with one another in such a manner that by means of an imaginary 180° pivoting in each case of one of two respectively adjacent parts about an axis placed between the parts and running parallel to the grooves and webs, the grooves and webs of the parts can be transferred into a congruent position, **characterized in that** it forms a stand which consists of two end parts (3, 4) and at least one intermediate part (1, 2) arranged between said end parts, and **in that** the end parts (3, 4), which are provided with at least one groove (5) and at least one web (6) on just one side, are designed such that they can be interchanged.

2. Component group according to Claim 1, **characterized in that** each of the sides, which are to be connected to one another, of the parts to be joined together has in each case two grooves (5) and webs (6) which are arranged at a distance from one another perpendicularly to a common central line (7) of the parts and which are aligned with one another.

3. Component group according to Claim 2, **characterized in that** grooves (5) are arranged on both sides of the common central line (7) of the parts (3,1; 1,2; 2,4) connected to one another.

4. Component group according to one or more of Claims 1 to 3, **characterized in that** the webs (6) are provided with position-fixing dogs (8).

## Revendications

1. Groupe préfabriqué constitué de plusieurs pièces emboîtables, dans lequel chacun des côtés des pièces à assembler l'une à l'autre présente au moins une encoche en contre-dépouille et une nervure et dans lequel la forme et la position des encoches et des nervures qui peuvent être amenées en engagement mutuel sont adaptées les unes aux autres de sorte que, par un pivotement imaginaire de 180° respectivement d'une des deux pièces adjacentes respectives autour d'un axe disposé entre les pièces s'étendant parallèlement aux encoches et aux nervures, les encoches et les nervures des pièces soient transférées dans une position équivalente, **caractérisé en ce que** le groupe préfabriqué forme une ossature, qui est constituée de deux pièces d'extrémité (3, 4) et d'au moins une pièce intermédiaire (1, 2) agencée entre elles et **en ce que** les pièces d'extrémité (3, 4) présentant, seulement sur un côté, au moins une encoche (5) et au moins une nervure (6) peuvent être échangées mutuellement.

2. Groupe préfabriqué selon la revendication 1, **caractérisé en ce que** chacun des côtés à assembler l'un à l'autre des pièces à coupler présente respectivement deux encoches (5) et nervures (6) agencées perpendiculairement à une ligne centrale commune (7) des pièces à distance l'une de l'autre et agencées de niveau l'une avec l'autre.

3. Groupe préfabriqué selon la revendication 2, **caractérisé en ce que**, des deux côtés de la ligne centrale commune (7) des pièces assemblées l'une à l'autre (3, 1; 1, 2; 2, 4), sont agencées des encoches (5).

4. Groupe préfabriqué selon l'une ou plusieurs des revendications 1 à 3, **caractérisé en ce que** les nervures (6) sont pourvues de taquets d'arrêt de position (8).
